# EUROPEAN PATENT APPLICATION

(11) **EP 4 398 628 A1**
(43) Date of publication of application: **10.07.2024**
(21) Application number: 21955362.5
(22) Date of filing: 30.08.2021
(51) Int. Cl.: H04W 24/10

(54) **METHOD AND APPARATUS FOR REPORTING INFORMATION, COMMUNICATION DEVICE, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Hughes, Andrea Michelle
(86) International application number: PCT/CN2021/115452
(87) International publication number: WO 2023/028782

(57) **Abstract**

Embodiments of the present disclosure provide a method for reporting information. The method is executed by a core network device and comprises: sending activation instruction information to a base station, the activation instruction information instructing the base station to issue configuration information used for enabling a terminal to report predetermined information.

## Description

### TECHNICAL FIELD

The present disclosure relates to, but is not limited to, the field of radio communication technologies, and in particular, to reporting information methods and apparatuses, communication devices and storage media.

### BACKGROUND

In communication networks, especially in a scenario of supporting self optimization network (SON) and minimization of drive test (MDT), a network needs to obtain some information, for example, measurement information, which can be radio signal quality information, radio link failure (RLF) information, location information of a terminal, and so on.

In related technologies, since the reported information may be sensitive information, the reported information may be at risk of being stolen, which may lead to leakage of user privacy and poor security.

### SUMMARY

Embodiments of the present disclosure disclose reporting information methods, apparatuses, communication devices and storage media.

According to a first aspect of an embodiment of the present disclosure, a method of reporting information is provided, which is performed by a core network device, and the method includes:
sending activation indication information to a base station;
where the activation indication information indicates that the base station transmits configuration information for enabling a terminal to report predetermined information.

According to a second aspect of an embodiment of the present disclosure, a method of reporting information is provided, which is performed by a base station, and the method includes:
sending configuration information to a terminal;
where the configuration information is used to enable the terminal to report predetermined information.

According to a third aspect of an embodiment of the present disclosure, a method of reporting information is provided, which is performed by a terminal, and the method includes:
receiving configuration information sent by a base station; and
reporting predetermined information according to the configuration information.

According to a fourth aspect of an embodiment of the present disclosure, an apparatus for reporting information is provided, which is used in a core network, and the apparatus includes:
a sending module, configured to send activation indication information to a base station;
where the activation indication information indicates that the base station transmits configuration information for enabling a terminal to report predetermined information.

According to a fifth aspect of an embodiment of the present disclosure, an apparatus for reporting information is provided, which is used in a base station, and the apparatus includes:
a sending module, configured to send configuration information to the terminal;
where the configuration information is used to enable the terminal to report predetermined information.

According to a sixth aspect of an embodiment of the present disclosure, an apparatus for reporting information is provided, which is used in a terminal, and the apparatus includes:
a receiving module, configured to receive configuration information sent by a base station; and
report predetermined information according to the configuration information.

According to a seventh aspect of an embodiment of the present disclosure, a communication device is provided, including:
a processor, and
a memory for storing processor-executable instructions;
where the processor is configured to implement the method according to any embodiment of the present disclosure when the executable instructions are executed.

According to an eighth aspect of an embodiment of the present disclosure, a computer storage medium is provided, storing a computer-executable program which, when executed by a processor, implements the method according to any embodiment of the present disclosure.

In an embodiment of the present disclosure, activation indication information is sent to a base station; where the activation indication information indicates that the base station transmits configuration information for enabling a terminal to report predetermined information. After a core network device sends the activation indication information to the base station, the base station will transmit the configuration information for enabling the terminal to report the predetermined information, so that the terminal can report the predetermined information based on an indication of the configuration information. Compared with a reporting mode that the terminal randomly reports the predetermined information without acquiring the configuration information, a leakage of sensitive predetermined information can be reduced and a security of reporting the predetermined information by the terminal can be improved.

### BRIEF DESCRIPTION OF DRAWINGS

FIG. 1 is a schematic structural diagram illustrating a wireless communication system according to an exemplary embodiment.
FIG. 2 is a flowchart illustrating a method of reporting information according to an exemplary embodiment.
FIG. 3A is a flowchart illustrating a method of reporting information according to an exemplary embodiment.
FIG. 3B is a flowchart illustrating a method of reporting information according to an exemplary embodiment.
FIG. 4 is a flowchart illustrating a method of reporting information according to an exemplary embodiment.
FIG. 5 is a flowchart illustrating a method of reporting information according to an exemplary embodiment.
FIG. 6 is a flowchart illustrating a method of reporting information according to an exemplary embodiment.
FIG. 7A is a flowchart illustrating a method of reporting information according to an exemplary embodiment.
FIG. 7B is a flowchart illustrating a method of reporting information according to an exemplary embodiment.
FIG. 8 is a flowchart illustrating a method of reporting information according to an exemplary embodiment.
FIG. 9 is a flowchart illustrating a method of reporting information according to an exemplary embodiment.
FIG. 10 is a flowchart illustrating a method of reporting information according to an exemplary embodiment.
FIG. 11 is a flowchart illustrating a method of reporting information according to an exemplary embodiment.
FIG. 12 is a flowchart illustrating a method of reporting information according to an exemplary embodiment.
FIG. 13 is a flowchart illustrating a method of reporting information according to an exemplary embodiment.
FIG. 14 is a flowchart illustrating a method of reporting information according to an exemplary embodiment.
FIG. 15 is a flowchart illustrating a method of reporting information according to an exemplary embodiment.
FIG. 16 is a flowchart illustrating a method of reporting information according to an exemplary embodiment.
FIG. 17A is a flowchart illustrating a method of reporting information according to an exemplary embodiment.
FIG. 17B is a flowchart illustrating a method of reporting information according to an exemplary embodiment.
FIG. 18 is a schematic diagram illustrating an apparatus for reporting information according to an exemplary embodiment.
FIG. 19 is a schematic diagram illustrating an apparatus for reporting information according to an exemplary embodiment.
FIG. 20 is a schematic diagram illustrating an apparatus for reporting information according to an exemplary embodiment.
FIG. 21 is a schematic structural diagram illustrating a terminal according to an exemplary embodiment.
FIG. 22 is a block diagram illustrating a base station according to an exemplary embodiment.

### DETAILED DESCRIPTION

Exemplary embodiments will be described in detail here, examples of which are illustrated in the accompanying drawings. When the following description relates to the accompanying drawings, unless specified otherwise, the same numerals in different accompanying drawings represent the same or similar elements. Implementations described in the following exemplary embodiments do not represent all implementations consistent with embodiments of the present disclosure. Rather, they are merely examples of apparatuses and methods consistent with some aspects of embodiments of the present disclosure as detailed in the appended claims.

The terms used in the embodiments of the present disclosure are for the purpose of describing particular embodiments only, and are not intended to limit the embodiments of the present disclosure. The singular forms such as "a", "said" and "the" used in the embodiments of the present disclosure and the appended claims are also intended to include multiple, unless the context clearly indicates otherwise. It should also be understood that the term "and/or" used herein includes any and all possible combinations of one or more of the associated listed items.

It should be understood that although different information may be described using the terms such as "first," "second," "third," etc. in the present disclosure, the information should not be limited to these terms. These terms are used to distinguish one category of information from another. For example, the first information may also be referred to as the second information without departing from the scope of the present disclosure, and similarly, the second information may also be referred to as the first information. Depending on the context, the word "if' as used herein may be interpreted as "when" or "upon" or "in response to determining".

For the sake of conciseness and easy understanding, the term "greater than" or "less than" is used in this paper to represent the relationship between size. However, it is understood by those skilled in the art that the term "greater than" also covers the meaning of "greater than or equal to", and "less than" also covers the meaning of "less than or equal to".

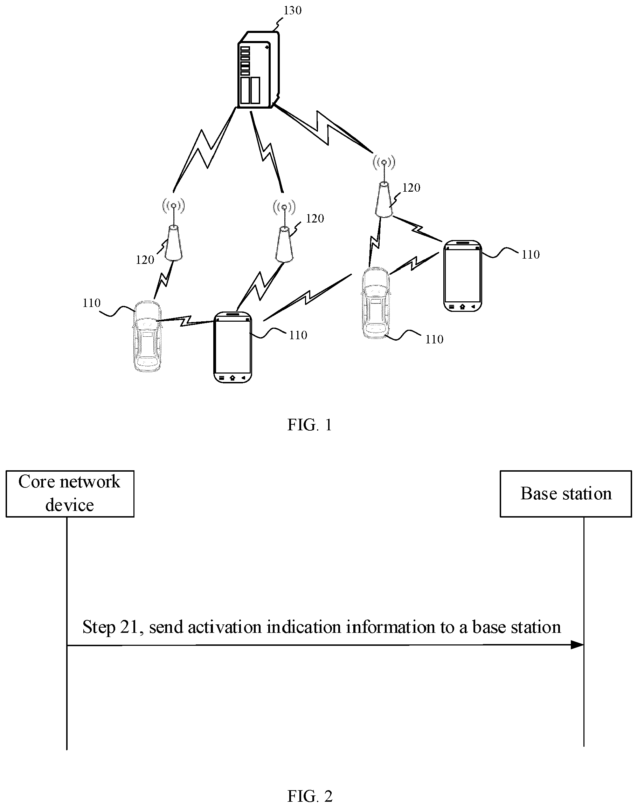

Please refer to FIG. 1, which shows a schematic structural diagram of a wireless communication system according to an embodiment of the present disclosure. As shown in FIG. 1, the wireless communication system is a communication system based on mobile communication technology, which may include several user equipment 110 and several base stations 120.

The user equipment 110 may be a device that provides voice and/or data connectivity to users. The user equipment 110 can communicate with one or more core networks via a radio access network (RAN). The user equipment 110 can be an Internet of Things user equipment, such as a sensor device, a mobile phone, and a computer with an Internet of Things user equipment. For example, it can be a fixed, portable, pocket-sized, handheld, computer-built or vehicle-mounted apparatus. For example, a Station (STA), a subscriber unit, a subscriber station, a mobile station, a mobile, a remote station, an access point, a remote terminal, an access terminal, a user terminal, a user agent, a user device, or user equipment. Or, the user equipment 110 may also be a device of an unmanned aerial vehicle. Or, the user equipment 110 may also be a vehicle-mounted equipment, for example, a driving computer with wireless communication function, or a wireless user equipment with an external driving computer. Or, the user equipment 110 may also be a roadside device, such as a street lamp, a signal lamp or other roadside device with wireless communication function.

The base station 120 may be a network-side device in a wireless communication system. The wireless communication system can be a 4th generation mobile communication (4G) system, also known as a long term evolution (LTE) system. Or, the wireless communication system can also be a 5G system, also known as a new radio system or a 5G NR system. Or, the wireless communication system can also be a next generation system of the 5G system. An access network in the 5G system can be called new generation-radio access network (NG-RAN).

The base station 120 may be an evolved base station (eNB) adopted in the 4G system. Or, the base station 120 may also be a base station (gNB) adopting a centralized and distributed architecture in the 5G system. When the base station 120 adopts a centralized and distributed architecture, it usually includes a central unit (CU) and at least two distributed unit (DUs). A protocol stack of packet data convergence protocol (PDCP) layer, radio link control protocol (RLC) layer and media access control (MAC) layer is provided in the central unit; a protocol stack for a physical (PHY) layer is provided in the distributed unit, and embodiments of the present disclosure do not limit the specific implementation of the base station 120.

A wireless connection can be established between the base station 120 and the user equipment 110 through an air interface. In different implementations, the air interface is an air interface based on the fourth generation mobile communication network technology (4G) standard; or the air interface is an air interface based on the fifth generation mobile communication network technology (5G) standard, for example, the air interface is a new radio; or, the air interface can also be an air interface based on a technical standard of a next generation mobile communication network of 5G.

In some embodiments, an E2E (End to End) connection can also be established between the user equipment 110. For example, scenarios of vehicle to vehicle (V2V) communication, vehicle to Infrastructure (V2I) communication and vehicle to pedestrian (V2P) communication in vehicle to everything (V2X) communication.

The user equipment can be considered as a terminal device of the following embodiments.

In some embodiments, the wireless communication system may further include a network management device 130.

Several base stations 120 are connected to the network management device 130. The network management device 130 may be a core network device in a wireless communication system. For example, the network management device 130 may be a mobility management entity (MME) in an evolved packet core (EPC). Or, the network management device can also be other core network devices, such as a Serving GateWay (SGW), a Public Data Network GateWay (PGW), a Policy and Charging Rules Function (PCRF) or a Home Subscriber Server (HSS). The embodiments of the present disclosure do not limit an implementation form of the network management device 130.

In order to facilitate the understanding of those skilled in the art, the embodiments of the present disclosure list a plurality of embodiments to clearly explain the technical solution of the embodiments of the present disclosure. Those skilled in the art can understand that the embodiments provided by the embodiments of the present disclosure can be executed alone, combined with the methods of other embodiments of the embodiments of the present disclosure, or together with some methods of other related technologies; the embodiments of the present disclosure do not limit this.

In order to better understand the technical solution disclosed in the embodiment of the present disclosure, an application scenario of reporting information by the terminal is explained in the following.

Long-term evolution (LTE) networks and new radio (NR) networks support MDT and/or SON technologies.

In one scenario embodiment, MDT technology includes logged MDT and immediate MDT. The logged MDT is used for the terminal to record signal quality of a cell and terminal location information in a radio resource control (RRC) idle state or RRC inactive state, and report them to the network. It should be noted that the reported information can further be other measurement information such as WiFi, Bluetooth and air pressure. Immediate MDT is used for reporting signal quality of a cell and terminal location information to the network when the terminal is in an RRC connected state.

In one scenario embodiment, the SON technology includes that the terminal records relevant information when RLF, RRC connection establishment failure and/or RRC connection reestablishment failure occurs, and reports this information and terminal location information to the network. For MDT, the network needs to configure the terminal with MDT function before the terminal can record and report the relevant measurement and location information. If the network configures a terminal with MDT function, it must obtain user consent before configuring the terminal with MDT function. However, there is no need to perform configuration for the relevant information and location information about master cell group RLF, secondary cell group RLF or RRC connection establishment failure, but it needs to be reported to the network as long as the failure happens. For the MDT and SON, the location information is based on an availability principle, that is, it is reported only when the location information is available, and if the location information is not available, it is not mandatory to obtain the location information.

As shown in FIG. 2, a method of reporting information is provided in this embodiment, where the method is performed by a core network device, including:
at step 21, activation indication information is sent to a base station;
where the activation indication information indicates that the base station transmits configuration information for enabling a terminal to report predetermined information.

The terminal may be, but is not limited to, a mobile phone, a tablet computer, a wearable device, a vehicle-mounted terminal, a road side unit (RSU), a smart home terminal, an industrial sensing device, and/or a medical device, etc. For example, the smart home terminal may include a camera, a temperature acquisition device, a brightness acquisition device, etc.

The base station to which the present disclosure relates may be various types of base stations, such as, for example, a base station for a third-generation mobile communication (3G) network, a base station for a fourth-generation mobile communication (4G) network, a base station for a fifth-generation mobile communication (5G) network, or other evolved base stations.

The core network device to which the present disclosure relates may be a unified data management (UDM) entity and an Access Control And Mobility Management Function (AMF) entity, etc.

In an embodiment, the user consent information may be included in user subscription information, and the user subscription information may be saved in the UDM. It should be noted that the user consent information may indicate consent to report the predetermined information or indicate no consent to report the predetermined information. The terminal can report the predetermined information only when a user consents to report the predetermined information, that is, the user consent information carries information about whether or not the user consents to report the predetermined information, and the terminal can report the predetermined information only when the user consent information indicates consent to report the predetermined information.

In an embodiment, the UDM determines whether the user consent information indicates consent to report predetermined information. In response to the user consent information indicating that the user consents to report the predetermined information, UDM sends notification information to AMF. In response to the AMF receiving the notification information, the AMF sends the activation indication information to the base station. In response to the base station receiving the activation indication information, the base station sends the configuration information for reporting the predetermined information to the terminal. In this way, after acquiring the predetermined information, the terminal can send the predetermined information to the network based on the configuration information. It should be noted that if the base station does not receive the activation indication information, the base station will not send the configuration information to the terminal. If the terminal does not receive the configuration information, the terminal will not send the predetermined information to the network.

In another embodiment, the UDM sends the user consent information to the AMF. In response to the AMF receiving the user consent information, the AMF sends the user consent information to the base station. The base station determines whether the user consent information indicates consent to report the predetermined information. In response to the base station determining that the user consent information indicates consent to report the predetermined information, the base station sends the configuration information for reporting the predetermined information to the terminal after receiving the activation indication information sent by AMF.

In some examples, after a predetermined event is triggered, AMF sends the activation indication information to the base station. In this way, after acquiring the predetermined information, the terminal can send the predetermined information to the network based on the configuration information. It should be noted that if the base station determines that the user consent information indicates that the user does not consent to report the predetermined information and/or the base station does not receive the activation indication information, the base station will not send the configuration information to the terminal. If the terminal does not receive the configuration information, the terminal will not send the predetermined information to the network.

The predetermined information includes at least one of the following:
radio link failure (RLF) information;
radio resource control (RRC) connection establishment failure information;
radio resource control (RRC) connection reestablishment failure information; or,
location information of the terminal.

It should be noted that the predetermined information may further include other measurement information such as signal quality of a cell, WiFi, Bluetooth and air pressure, and is not limited here.

In some possible implementations, the predetermined information includes the location information of the terminal in response to the user consent information indicating consent to report the location information of the terminal. Furthermore, in some possible embodiments of the present application, the configuration information includes one or more of the following:

first information, indicating that the configuration information is applicable for reporting RLF, RRC connection establishment failure and/or RRC connection reestablishment failure;
second information, indicating that the configuration information is applicable for reporting a master cell group RLF and/or a secondary cell group RLF;
third information, indicating that the configuration information is applicable for reporting when the terminal is in an RRC idle state, RRC inactive state and/or RRC connected state;
fourth information, indicating an area where the configuration information takes effect;
fifth information, indicating a time when the configuration information takes effect; or
sixth information, indicating whether the predetermined information contains or does not contain the location information of the terminal.

In an embodiment, when the terminal is in the RRC connected state, the reported predetermined information may include RLF information. When the terminal is in the RRC idle state or the RRC inactive state, the reported predetermined information may include the information of the RRC connection establishment failure and/or the RRC connection reestablishment failure.

In an embodiment, the effective area may be indicated by a physical cell identifier, a cell identifier, a tracking area identifier, a notification area identifier and the like. The terminal records and reports the predetermined information only when RLF, RRC connection establishment failure and/or RRC connection reestablishment failure occurs in this area. At the same time, time can further be configured, and the terminal records and reports the predetermined information only when RLF, RRC connection establishment failure and/or RRC connection reestablishment failure occurs in this time duration.

In an embodiment, in response to the sixth information indicating that the predetermined information contains the location information of the terminal, the reported predetermined information contains the location information of the terminal. Or, in response to the sixth information indicating that the predetermined information does not contain the location information of the terminal, the reported predetermined information does not contain the location information of the terminal.

In an embodiment, default configuration predetermined information contains information of RLF and information of RRC connection establishment failure. In another embodiment, information specifically included in the predetermined information may be indicated in the configuration information. For example, the configuration information may indicate that the predetermined information includes information of RLF and the like.

In an embodiment, if the configuration information indicates that the predetermined information reported by the terminal needs to include the location information of the terminal, the predetermined information reported by the terminal includes the location information of the terminal. Otherwise, the predetermined information reported by the terminal does not include the location information of the terminal. In an embodiment, in response to the user consent information indicating consent to report the location information of the terminal, the predetermined information reported by the terminal is configured by default to include the location information of the terminal.

In an embodiment of the present disclosure, activation indication information is sent to a base station; where the activation indication information indicates that the base station transmits configuration information for enabling a terminal to report predetermined information. After the core network device sends the activation indication information to the base station, the base station will transmit the configuration information for enabling the terminal to report the predetermined information, so that the terminal can report the predetermined information based on an indication of the configuration information. Compared with a reporting mode that the terminal randomly reports the predetermined information without acquiring the configuration information, a leakage of sensitive predetermined information can be reduced and a security of reporting the predetermined information by the terminal can be improved.

It should be noted that those skilled in the art can understand that the methods provided by the embodiments of the present disclosure can be executed alone or together with some methods in the embodiments of the present disclosure or some methods in related technologies.

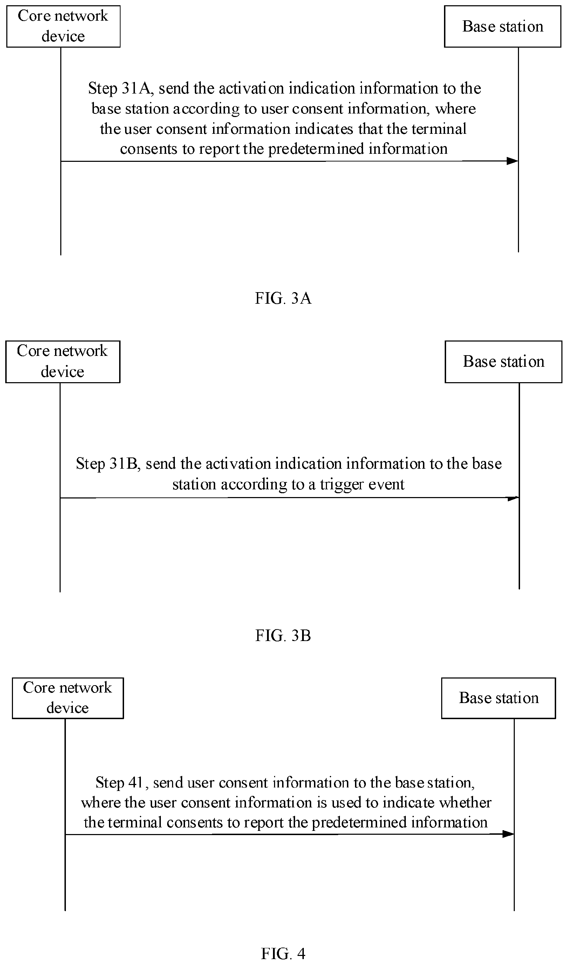

As shown in FIG. 3A, a method of reporting information is provided in this embodiment, where the method is performed by a core network device, including:
at step 31A, the activation indication information is sent to the base station according to user consent information, where the user consent information indicates that the terminal consents to report the predetermined information.

In an embodiment, the UDM determines whether the user consent information indicates consent to report predetermined information. In response to the user consent information indicating that the user consents to report the predetermined information, UDM sends notification information to AMF. In response to the AMF receiving the notification information, the AMF sends the activation indication information to the base station. In response to the base station receiving the activation indication information, the base station sends configuration information for reporting the predetermined information to the terminal. In this way, after acquiring the predetermined information, the terminal can send the predetermined information to the network based on the configuration information. It should be noted that if the user consent information indicates that the terminal does not consent to report the scheduled information, the activation indication information will not be sent to the base station.

As shown in FIG. 3B, a method of reporting information is provided in this embodiment, where the method is performed by a core network device, including:
at step 31B, the activation indication information is sent to the base station according to a trigger event.

In an embodiment, in response to a trigger event being triggered, the activation indication information is sent to a base station. In response to the trigger event not being triggered, the activation indication information is not sent to the base station.

In an embodiment, the trigger event may include a location event that the network needs to locate the terminal. In response to the location event being triggered, the activation indication information will be sent to the base station. In response to the positioning event not being triggered, the activation indication information will not be sent to the base station.

In an embodiment, UDM sends user consent information to AMF. In response to receiving the user consent information, AMF sends the user consent information to the base station. After the trigger event is triggered, AMF sends the activation indication information to the base station. The base station determines whether the user consent information indicates consent to report the predetermined information. In response to the base station determining that the user consent information indicates consent to report the predetermined information, the base station sends configuration information for reporting the predetermined information to the terminal after receiving the activation indication information sent by AMF. It should be noted that if the base station determines that the user consent information indicates that the terminal does not consent to report the predetermined information and/or the base station does not receive the activation indication information, the base station will not send the configuration information to the terminal.

It should be noted that those skilled in the art can understand that the methods provided by the embodiments of the present disclosure can be executed alone or together with some methods in the embodiments of the present disclosure or some methods in related technologies.

As shown in FIG. 4, a method of reporting information is provided in this embodiment, where the method is performed by a core network device, including:
at step 41, user consent information is sent to the base station, where the user consent information is used to indicate whether the terminal consents to report the predetermined information.

At step 21, the core network device determines whether the user consent information consents to report the predetermined information. However, at step 41, after the user consent information is sent to the base station, the base station determines whether the user consent information consents to report the predetermined information.

In an embodiment, the UDM sends the user consent information to the AMF. In response to the AMF receiving the user consent information, the AMF sends the user consent information to the base station. The base station determines whether the user consent information indicates consent to report the predetermined information. In response to the base station determining that the user consent information indicates consent to report the predetermined information, the base station sends configuration information for reporting the predetermined information to the terminal after receiving activation indication information sent by AMF. It may be that AMF sends the activation indication information to the base station after a predetermined event is triggered.

In this way, after acquiring the predetermined information, the terminal can send the predetermined information to the network based on the configuration information. It should be noted that if the base station determines that the user consent information indicates that it does not consent to report the predetermined information and/or the base station does not receive the activation indication information, the base station will not send the configuration information to the terminal. If the terminal does not receive the configuration information, the terminal will not send the predetermined information to the network.

It should be noted that those skilled in the art can understand that the methods provided by the embodiments of the present disclosure can be executed alone or together with some methods in the embodiments of the present disclosure or some methods in related technologies.

In an embodiment, the predetermined information includes at least one of the following:
radio link failure (RLF) information;
radio resource control (RRC) connection establishment failure information;
RRC connection reestablishment failure information; or,
location information of the terminal.

In some possible implementations, the predetermined information includes the location information of the terminal in response to the user consent information indicating consent to report the location information of the terminal.

It should be noted that the predetermined information may further include other measurement information such as signal quality of a cell, WiFi, Bluetooth and air pressure, and is not limited here.

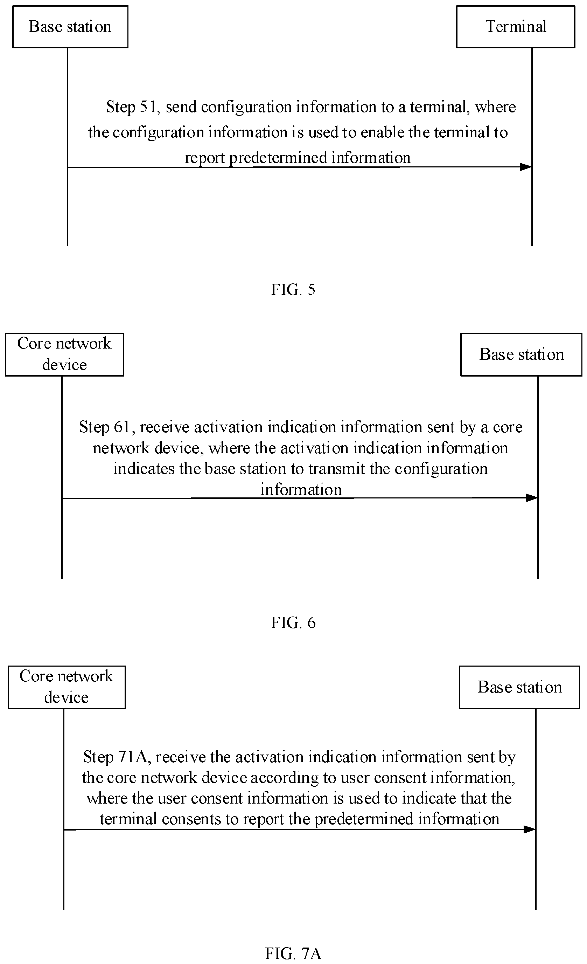

As shown in FIG. 5, a method of reporting information is provided in this embodiment, where the method is performed by a base station, including:
at step 51, configuration information is sent to a terminal, where the configuration information is used to enable the terminal to report predetermined information.

The terminal may be, but is not limited to, a mobile phone, a tablet computer, a wearable device, a vehicle-mounted terminal, a road side unit (RSU), a smart home terminal, an industrial sensing device, and/or a medical device, etc. For example, the smart home terminal may include a camera, a temperature acquisition device, a brightness acquisition device, etc.

The base station to which the present disclosure relates may be various types of base stations, such as, for example, a base station for a third-generation mobile communication (3G) network, a base station for a fourth-generation mobile communication (4G) network, a base station for a fifth-generation mobile communication (5G) network, or other evolved base stations.

The core network device to which the present disclosure relates may be a unified data management (UDM) entity and an Access Control And Mobility Management Function (AMF) entity, etc.

In an embodiment, the UDM determines whether the user consent information indicates consent to report predetermined information. In response to the user consent information indicating that the user consents to report the predetermined information, UDM sends notification information to AMF. In response to the AMF receiving the notification information, the AMF sends the activation indication information to the base station. In response to the base station receiving the activation indication information, the base station sends the configuration information for reporting the predetermined information to the terminal. In this way, after acquiring the predetermined information, the terminal can send the predetermined information to the network based on the configuration information. It should be noted that if the base station does not receive the activation indication information, the base station will not send the configuration information to the terminal. If the terminal does not receive the configuration information, the terminal will not send the predetermined information to the network.

In another embodiment, the UDM sends the user consent information to the AMF. In response to the AMF receiving the user consent information, the AMF sends the user consent information to the base station. The base station determines whether the user consent information indicates consent to report the predetermined information. In response to the base station determining that the user consent information indicates consent to report the predetermined information, the base station sends the configuration information for reporting the predetermined information to the terminal after receiving the activation indication information sent by AMF. It may be that AMF sends the activation indication information to the base station after a predetermined event is triggered. In this way, after acquiring the predetermined information, the terminal can send the predetermined information to the network based on the configuration information. It should be noted that if the base station determines that the user consent information indicates that the user does not consent to report the predetermined information and/or the base station does not receive the activation indication information, the base station will not send the configuration information to the terminal. If the terminal does not receive the configuration information, the terminal will not send the predetermined information to the network.

The predetermined information includes at least one of the following:
radio link failure (RLF) information;
radio resource control (RRC) connection establishment failure information;
radio resource control (RRC) connection reestablishment failure information; or,
location information of the terminal.

In some possible implementations, the predetermined information includes the location information of the terminal in response to the user consent information indicating consent to report the location information of the terminal.

It should be noted that the predetermined information may further include other measurement information such as signal quality of a cell, WiFi, Bluetooth and air pressure, and is not limited here.

In an embodiment, default configuration predetermined information contains information of RLF and information of RRC connection establishment failure. In another embodiment, information specifically included in the predetermined information may be indicated in the configuration information. For example, the configuration information may indicate that the predetermined information includes information of RLF and the like.

Furthermore, in some possible embodiments of the present application, the configuration information includes one or more of the following:
first information, indicating that the configuration information is applicable for reporting RLF, RRC connection establishment failure and/or RRC connection reestablishment failure;
second information, indicating that the configuration information is applicable for reporting a master cell group RLF and/or a secondary cell group RLF;
third information, indicating that the configuration information is applicable for reporting when the terminal is in an RRC idle state, RRC inactive state and/or RRC connected state;
fourth information, indicating an area where the configuration information takes effect;
fifth information, indicating a time when the configuration information takes effect; or
sixth information, indicating whether the predetermined information contains or does not contain the location information of the terminal.

In an embodiment, when the terminal is in the RRC connected state, the reported predetermined information may include RLF information. When the terminal is in the RRC idle state or the RRC inactive state, the reported predetermined information may include the information of the RRC connection establishment failure and/or the RRC connection reestablishment failure.

In an embodiment, the effective area may be indicated by a physical cell identifier, a cell identifier, a tracking area identifier, a notification area identifier and the like. The terminal records and reports the predetermined information only when RLF, RRC connection establishment failure and/or RRC connection reestablishment failure occurs in this area. At the same time, time can further be configured, and the terminal records and reports the predetermined information only when RLF, RRC connection establishment failure and/or RRC connection reestablishment failure occurs in this time duration.

In an embodiment, in response to the sixth information indicating that the predetermined information contains the location information of the terminal, the reported predetermined information contains the location information of the terminal. Or, in response to the sixth information indicating that the predetermined information does not contain the location information of the terminal, the reported predetermined information does not contain the location information of the terminal.

In an embodiment, if the configuration information indicates that the predetermined information reported by the terminal needs to include the location information of the terminal, the predetermined information reported by the terminal includes the location information of the terminal. Otherwise, the predetermined information reported by the terminal does not include the location information of the terminal. In an embodiment, in response to the user consent information indicating consent to report the location information of the terminal, the predetermined information reported by the terminal is configured by default to include the location information of the terminal.

It should be noted that those skilled in the art can understand that the methods provided by the embodiments of the present disclosure can be executed alone or together with some methods in the embodiments of the present disclosure or some methods in related technologies.

As shown in FIG. 6, a method of reporting information is provided in this embodiment, where the method is performed by a base station, including:
at step 61, activation indication information sent by a core network device is received, where the activation indication information indicates the base station to transmit the configuration information.

In an embodiment, the base station receives the activation indication information sent by AMF. In response to the base station receiving the activation indication information, the base station sends the configuration information for the terminal to report predetermined information. In this way, after acquiring the predetermined information, the terminal can send the predetermined information to the network based on the configuration information. It should be noted that if the base station does not receive the activation indication information, the base station will not send the configuration information to the terminal. If the terminal does not receive the configuration information, the terminal will not send the predetermined information to the network.

In another embodiment, the base station receives the user consent information sent by AMF. The base station determines whether the user consent information indicates consent to report the predetermined information. In response to the base station determining that the user consent information indicates consent to report the predetermined information, the base station sends the configuration information for reporting the predetermined information to the terminal after receiving the activation indication information sent by AMF. It may be that AMF sends the activation indication information to the base station after a predetermined event is triggered. In this way, after acquiring the predetermined information, the terminal can send the predetermined information to the network based on the configuration information. It should be noted that if the base station determines that the user consent information indicates that the user does not consent to report the predetermined information and/or the base station does not receive the activation indication information, the base station will not send the configuration information to the terminal. If the terminal does not receive the configuration information, the terminal will not send the predetermined information to the network.

It should be noted that those skilled in the art can understand that the methods provided by the embodiments of the present disclosure can be executed alone or together with some methods in the embodiments of the present disclosure or some methods in related technologies.

As shown in FIG. 7A, a method of reporting information is provided in this embodiment, where the method is performed by a base station, including:
at step 71A, the activation indication information sent by the core network device according to user consent information is received, where the user consent information is used to indicate that the terminal consents to report the predetermined information.

In an embodiment, in response to the user consent information indicating that the terminal consents to report predetermined information, the core network device sends the activation indication information to the base station. The base station receives the activation indication information sent by AMF. In response to the base station receiving the activation indication information, the base station sends the configuration information for the terminal to report predetermined information. In this way, after acquiring the predetermined information, the terminal can send the predetermined information to the network based on the configuration information. It should be noted that if the base station does not receive the activation indication information, the base station will not send the configuration information to the terminal. If the terminal does not receive the configuration information, the terminal will not send the predetermined information to the network.

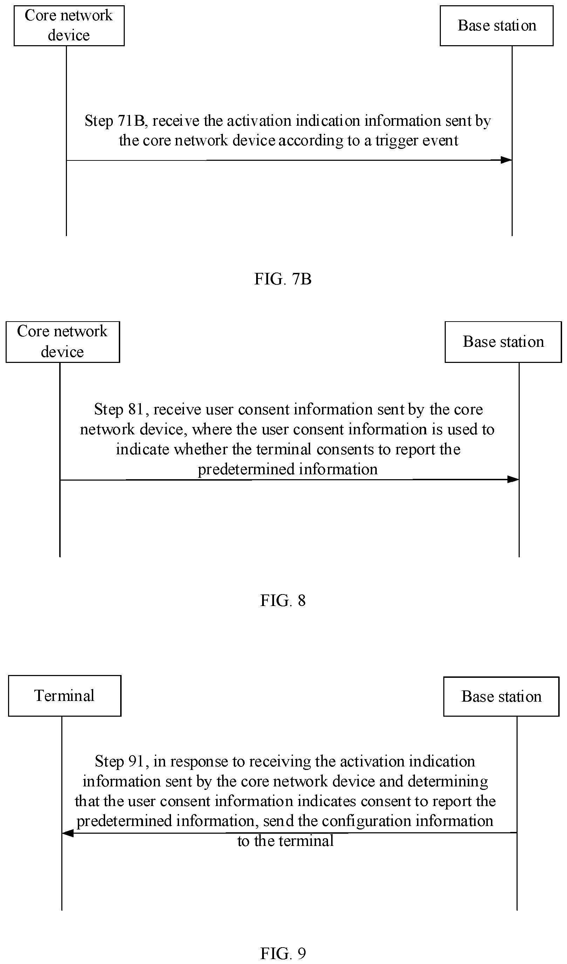

As shown in FIG. 7B, a method of reporting information is provided in this embodiment, where the method is performed by a base station, including:
at step 71B, the activation indication information sent by the core network device according to a trigger event is received.

In an embodiment, in response to the trigger event being triggered, the core network device sends activation indication information to the base station. The core network device sends user consent information to the base station, where the user consent information is used to indicate whether the terminal consents to report the predetermined information. The base station receives the activation indication information and the user consent information sent by core network device. In response to the base station determining that the user consent information indicates that it consents to report the predetermined information and receiving the activation indication information sent by the core network device, the base station sends configuration information for reporting the predetermined information to the terminal. In response to the base station determining that the user consent information indicates that it does not consent to report the predetermined information and receiving the activation indication information sent by the core network device, the base station does not send the configuration information for reporting the predetermined information to the terminal.

It should be noted that those skilled in the art can understand that the methods provided by the embodiments of the present disclosure can be executed alone or together with some methods in the embodiments of the present disclosure or some methods in related technologies.

As shown in FIG. 8, a method of reporting information is provided in this embodiment, where the method is performed by a base station, including:
at step 81, user consent information sent by the core network device is received, where the user consent information is used to indicate whether the terminal consents to report the predetermined information.

In an embodiment, in response to the trigger event being triggered, the core network device sends activation indication information to the base station. The core network device sends user consent information to the base station, where the user consent information is used to indicate whether the terminal consents to report the predetermined information. The base station receives the activation indication information and the user consent information sent by core network device. In response to the base station determining that the user consent information indicates that it consents to report the predetermined information and receiving the activation indication information sent by the core network device, the base station sends configuration information for the terminal to report the predetermined information. It should be noted that in response to the base station determining that the user consent information indicates no consent to report the predetermined information, the base station does not send configuration information for reporting the predetermined information to the terminal. For example, in response to the base station determining that the user consent information indicates that it does not consent to report the predetermined information and receiving the activation indication information sent by the core network device, the base station does not send the configuration information for reporting the predetermined information to the terminal. Even if the activation indication information is received, the configuration information will not be sent because the user consent information does not consent to report the predetermined information.

It should be noted that those skilled in the art can understand that the methods provided by the embodiments of the present disclosure can be executed alone or together with some methods in the embodiments of the present disclosure or some methods in related technologies.

As shown in FIG. 9, a method of reporting information is provided in this embodiment, where the method is performed by a base station, including:

At step 91, in response to receiving the activation indication information sent by the core network device and determining that the user consent information indicates consent to report the predetermined information, the configuration information is sent to the terminal.

In an embodiment, in response to the trigger event being triggered, the core network device sends activation indication information to the base station. The core network device sends user consent information to the base station, where the user consent information is used to indicate whether the terminal consents to report the predetermined information. The base station receives the activation indication information and the user consent information sent by core network device. In response to the base station determining that the user consent information indicates that it consents to report the predetermined information and receiving the activation indication information sent by the core network device, the base station sends configuration information for the terminal to report the predetermined information. It should be noted that in response to the base station determining that the user consent information indicates that it does not consent to report the predetermined information and receiving the activation indication information sent by the core network device, the base station does not send the configuration information for reporting the predetermined information to the terminal.

It should be noted that those skilled in the art can understand that the methods provided by the embodiments of the present disclosure can be executed alone or together with some methods in the embodiments of the present disclosure or some methods in related technologies.

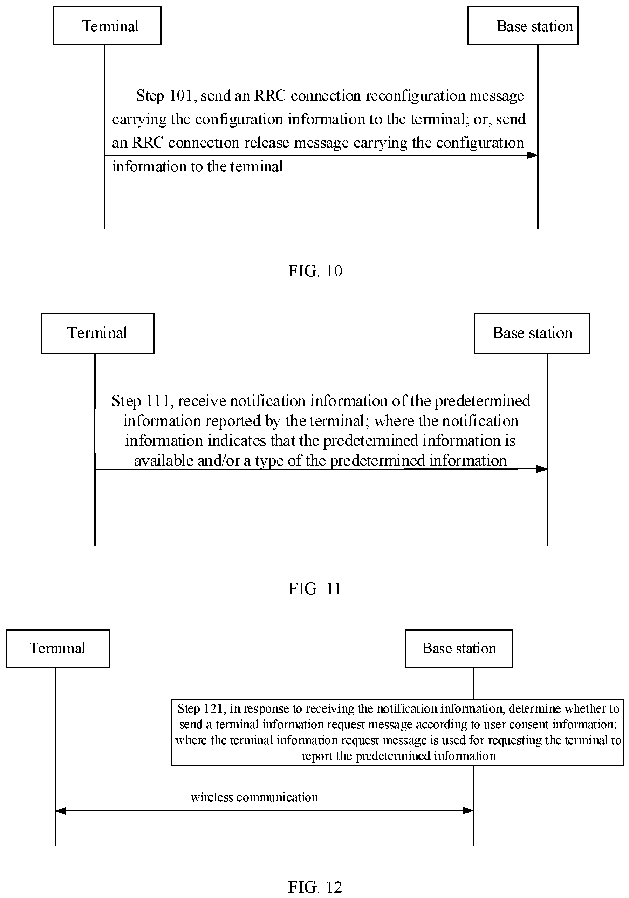

As shown in FIG. 10, a method of reporting information is provided in this embodiment, where the method is performed by a base station, including:
at step 101, an RRC connection reconfiguration message carrying the configuration information is sent to the terminal; or, an RRC connection release message carrying the configuration information is sent to the terminal.

In this way, the configuration information can be sent by using an existing message, and signalling compatibility is improved.

It should be noted that those skilled in the art can understand that the methods provided by the embodiments of the present disclosure can be executed alone or together with some methods in the embodiments of the present disclosure or some methods in related technologies.

As shown in FIG. 11, a method of reporting information is provided in this embodiment, where the method is performed by a base station, including:
at step 111, notification information of the predetermined information reported by the terminal is received; where the notification information indicates that the predetermined information is available and/or a type of the predetermined information.

In an embodiment, in response to the terminal acquiring the predetermined information, the terminal reports notification information. After the base station receives the notification information, it can send a request message for acquiring the predetermined information to the terminal. The type of the predetermined information may be a type of information contained in the predetermined information. The predetermined information includes at least one of the following:
radio link failure (RLF) information;
radio resource control (RRC) connection establishment failure information; or
location information of the terminal.

In some embodiments, the predetermined information includes the location information of the terminal in response to the user consent information indicating consent to report the location information of the terminal.

It should be noted that those skilled in the art can understand that the methods provided by the embodiments of the present disclosure can be executed alone or together with some methods in the embodiments of the present disclosure or some methods in related technologies.

As shown in FIG. 12, a method of reporting information is provided in this embodiment, where the method is performed by a base station, including:
at step 121, in response to receiving the notification information, whether to send a terminal information request message is determined according to user consent information; where the terminal information request message is used for requesting the terminal to report the predetermined information.

In an embodiment, the user consent information may be included in user subscription information, and the user subscription information may be saved in the UDM. The user consent information may indicate consent to report the predetermined information or indicate not consent to report the predetermined information. It may be that the UDM sends the user consent information to the base station.

In an embodiment, after receiving the notification information, a first terminal information request message requesting to acquire the predetermined information is sent in response to the user consent information indicating consent to report the predetermined information. In another embodiment, after receiving the notification information, the first terminal information request message is not sent in response to the user consent information indicating no consent to report the predetermined information. In yet another embodiment, after receiving the notification information, a second terminal information request message carrying a request to acquire the location information of the terminal in the predetermined information is sent in response to the user consent information indicating no consent to report the predetermined information.

It should be noted that those skilled in the art can understand that the methods provided by the embodiments of the present disclosure can be executed alone or together with some methods in the embodiments of the present disclosure or some methods in related technologies.

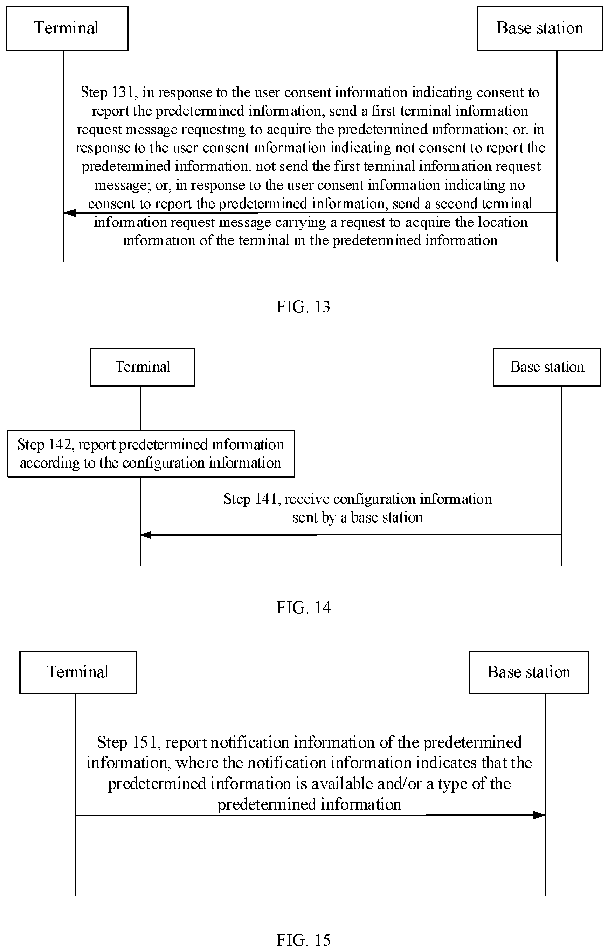

As shown in FIG. 13, a method of reporting information is provided in this embodiment, where the method is performed by a base station, including:
at step 131, in response to the user consent information indicating consent to report the predetermined information, a first terminal information request message requesting to acquire the predetermined information is sent; or, in response to the user consent information indicating no consent to report the predetermined information, the first terminal information request message is not sent; or, in response to the user consent information indicating no consent to report the predetermined information, a second terminal information request message carrying a request to acquire the location information of the terminal in the predetermined information is sent.

In an embodiment, if the user consent information indicates consents to report the predetermined information, the base station may send a UEInformationRequest message (corresponding to the first terminal information request message). The UEInformationRequest message indicates a request to report RLF or connection establishment failure report. In an embodiment, the UEInformationRequest message may further carry information indicating that location information is requested to be reported.

In another embodiment, if the user consent information indicates no consent to report the predetermined information, the base station cannot request the terminal to report the RLF or the connection establishment failure report.

In yet another embodiment, if the user consent information indicates no consent to report the predetermined information, the base station may send a second terminal information request message. In an embodiment, the second terminal information request message may carry information indicating that location information is requested to be reported.

It should be noted that those skilled in the art can understand that the methods provided by the embodiments of the present disclosure can be executed alone or together with some methods in the embodiments of the present disclosure or some methods in related technologies.

The predetermined information includes at least one of the following:
radio link failure (RLF) information;
radio resource control (RRC) connection establishment failure information;
radio resource control (RRC) connection reestablishment failure information; or,
location information of the terminal.

In some possible implementations, the predetermined information includes the location information of the terminal in response to the user consent information indicating consent to report the location information of the terminal.

It should be noted that the predetermined information may further include other measurement information such as signal quality of a cell, WiFi, Bluetooth and air pressure, and is not limited here.

In an embodiment, default configuration predetermined information contains information of RLF and information of RRC connection establishment failure. In another embodiment, information specifically included in the predetermined information may be indicated in the configuration information. For example, the configuration information may indicate that the predetermined information includes information of RLF and the like.

In an embodiment, if the configuration information indicates that the predetermined information reported by the terminal needs to include the location information of the terminal, the predetermined information reported by the terminal includes the location information of the terminal. Otherwise, the predetermined information reported by the terminal does not include the location information of the terminal. In an embodiment, in response to the user consent information indicating consent to report the location information of the terminal, the predetermined information reported by the terminal is configured by default to include the location information of the terminal.

In an embodiment, the configuration information includes one or more of the following:
first information, indicating that the configuration information is applicable for reporting RLF, RRC connection establishment failure and/or RRC connection reestablishment failure;
second information, indicating that the configuration information is applicable for reporting a master cell group RLF and/or a secondary cell group RLF;
third information, indicating that the configuration information is applicable for reporting when the terminal is in an RRC idle state, an RRC inactive state and/or an RRC connected state;
fourth information, indicating an area where the configuration information takes effect;
fifth information, indicating a time when the configuration information takes effect; or
sixth information, indicating whether the predetermined information contains or does not contain location information of the terminal.

In an embodiment, when the terminal is in the RRC connected state, the reported predetermined information includes RLF information. When the terminal is in the RRC idle state or the RRC inactive state, the reported predetermined information includes the information of the RRC connection establishment failure and/or the RRC connection reestablishment failure.

In an embodiment, the effective area may be indicated by a physical cell identifier, a cell identifier, a tracking area identifier, a notification area identifier and the like. The terminal records and reports the predetermined information only when RLF, RRC connection establishment failure and/or RRC connection reestablishment failure occurs in this area. At the same time, time can further be configured, and the terminal records and reports the predetermined information only when RLF, RRC connection establishment failure and/or RRC connection reestablishment failure occurs in this time duration.

In an embodiment, in response to the sixth information indicating that the predetermined information contains the location information of the terminal, the reported predetermined information contains the location information of the terminal. Or, in response to the sixth information indicating that the predetermined information does not contain the location information of the terminal, the reported predetermined information does not contain the location information of the terminal.

As shown in FIG. 14, a method of reporting information is provided in this embodiment, where the method is performed by a terminal, including:
at step 141, configuration information sent by a base station is received; and
at step 142, predetermined information is reported according to the configuration information.

The terminal may be, but is not limited to, a mobile phone, a tablet computer, a wearable device, a vehicle-mounted terminal, a road side unit (RSU), a smart home terminal, an industrial sensing device, and/or a medical device, etc. For example, the smart home terminal may include a camera, a temperature acquisition device, a brightness acquisition device, etc.

The base station to which the present disclosure relates may be various types of base stations, such as, for example, a base station for a third-generation mobile communication (3G) network, a base station for a fourth-generation mobile communication (4G) network, a base station for a fifth-generation mobile communication (5G) network, or other evolved base stations.

The core network device to which the present disclosure relates may be a unified data management (UDM) entity and an Access Control And Mobility Management Function (AMF) entity, etc.

In an embodiment, the UDM determines whether the user consent information indicates consent to report predetermined information. In response to the user consent information indicating that the user consents to report the predetermined information, UDM sends notification information to AMF. In response to the AMF receiving the notification information, the AMF sends the activation indication information to the base station. In response to the base station receiving the activation indication information, the base station sends the configuration information for reporting the predetermined information to the terminal. In this way, after acquiring the predetermined information, the terminal can send the predetermined information to the network based on the configuration information. It should be noted that if the base station does not receive the activation indication information, the base station will not send the configuration information to the terminal. If the terminal does not receive the configuration information, the terminal will not send the predetermined information to the network.

In another embodiment, the UDM sends the user consent information to the AMF. In response to the AMF receiving the user consent information, the AMF sends the user consent information to the base station. The base station determines whether the user consent information indicates consent to report the predetermined information. In response to the base station determining that the user consent information indicates consent to report the predetermined information, the base station sends the configuration information for reporting the predetermined information to the terminal after receiving the activation indication information sent by AMF. It may be that AMF sends the activation indication information to the base station after a predetermined event is triggered. In this way, after acquiring the predetermined information, the terminal can send the predetermined information to the network based on the configuration information. It should be noted that if the base station determines that the user consent information indicates that the user does not consent to report the predetermined information and/or the base station does not receive the activation indication information, the base station will not send the configuration information to the terminal. If the terminal does not receive the configuration information, the terminal will not send the predetermined information to the network.

The predetermined information includes at least one of the following:
radio link failure (RLF) information;
radio resource control (RRC) connection establishment failure information;
radio resource control (RRC) connection reestablishment failure information; or,
location information of the terminal.

It should be noted that the predetermined information may further include other measurement information such as signal quality of a cell, WiFi, Bluetooth and air pressure, and is not limited here.

In some possible implementations, the predetermined information includes the location information of the terminal in response to the user consent information indicating consent to report the location information of the terminal.

In an embodiment, default configuration predetermined information contains information of RLF and information of RRC connection establishment failure. In another embodiment, information specifically included in the predetermined information may be indicated in the configuration information. For example, the configuration information may indicate that information of RLF and the like.

Furthermore, in some possible embodiments of the present application, the configuration information includes one or more of the following:
first information, indicating that the configuration information is applicable for reporting RLF, RRC connection establishment failure and/or RRC connection reestablishment failure;
second information, indicating that the configuration information is applicable for reporting a master cell group RLF and/or a secondary cell group RLF;
third information, indicating that the configuration information is applicable for reporting when the terminal is in an RRC idle state, an RRC inactive state and/or an RRC connected state;
fourth information, indicating an area where the configuration information takes effect;
fifth information, indicating a time when the configuration information takes effect; or
sixth information, indicating whether the predetermined information contains or does not contain the location information of the terminal.

In an embodiment, when the terminal is in the RRC connected state, the reported predetermined information may include RLF information. When the terminal is in the RRC idle state or the RRC inactive state, the reported predetermined information may include the information of the RRC connection establishment failure and/or the RRC connection reestablishment failure.

In an embodiment, the effective area may be indicated by a physical cell identifier, a cell identifier, a tracking area identifier, a notification area identifier and the like. The terminal records and reports the predetermined information only when RLF, RRC connection establishment failure and/or RRC connection reestablishment failure occurs in this area. At the same time, time can further be configured, and the terminal records and reports the predetermined information only when RLF, RRC connection establishment failure and/or RRC connection reestablishment failure occurs in this time duration.

In an embodiment, in response to the sixth information indicating that the predetermined information contains the location information of the terminal, the reported predetermined information contains the location information of the terminal. Or, in response to the sixth information indicating that the predetermined information does not contain the location information of the terminal, the reported predetermined information does not contain the location information of the terminal.

In an embodiment, if the configuration information indicates that the predetermined information reported by the terminal needs to include the location information of the terminal, the predetermined information reported by the terminal includes the location information of the terminal. Otherwise, the predetermined information reported by the terminal does not include the location information of the terminal. In an embodiment, in response to the user consent information indicating consent to report the location information of the terminal, the predetermined information reported by the terminal is configured by default to include the location information of the terminal.

In some embodiments, an RRC connection reconfiguration message carrying the configuration information sent by the base station is received;
or,
an RRC connection release message carrying the configuration information sent by the base station is received.

It should be noted that those skilled in the art can understand that the methods provided by the embodiments of the present disclosure can be executed alone or together with some methods in the embodiments of the present disclosure or some methods in related technologies.

As shown in FIG. 15, a method of reporting information is provided in this embodiment, where the method is performed by a terminal, including:
at step 151, notification information of the predetermined information is reported, where the notification information indicates that the predetermined information is available and/or a type of the predetermined information.

In an embodiment, the notification information of predetermined information is reported in response to RRC connection being established.

In an embodiment, in response to the terminal acquiring the predetermined information, the terminal reports notification information. After the base station receives the notification information, it can send a request message for acquiring the predetermined information to the terminal. The type of the predetermined information may be a type of information contained in the predetermined information. The predetermined information includes at least one of the following:
radio link failure (RLF) information;
radio resource control (RRC) connection establishment failure information;
radio resource control (RRC) connection reestablishment failure information; or,
location information of the terminal.

In an embodiment, the predetermined information includes the location information of the terminal in response to the user consent information indicating consent to report the location information of the terminal.

In an embodiment, reporting the notification information of predetermined information includes:
reporting an RRC connection establishment completion message carrying the notification information;
   or,
reporting an RRC connection reestablishment completion message carrying the notification information.

It should be noted that those skilled in the art can understand that the methods provided by the embodiments of the present disclosure can be executed alone or together with some methods in the embodiments of the present disclosure or some methods in related technologies.

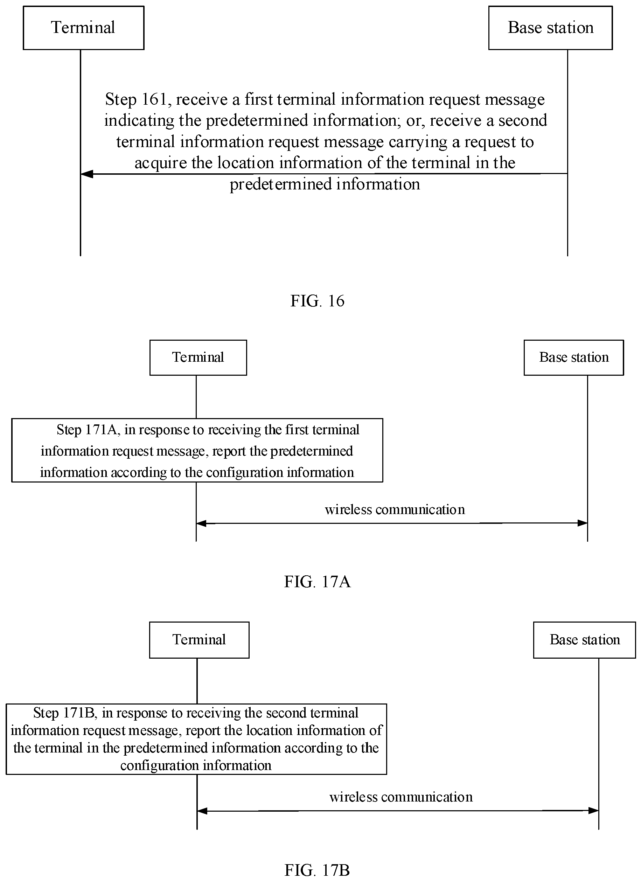

As shown in FIG. 16, a method of reporting information is provided in this embodiment, where the method is performed by a terminal, including:
at step 161, a first terminal information request message indicating the predetermined information is received; or, a second terminal information request message carrying a request to acquire the location information of the terminal in the predetermined information is received.

In an embodiment, the user consent information may be included in user subscription information, and the user subscription information may be saved in the UDM. The user consent information may indicate consent to report the predetermined information or indicate not consent to report the predetermined information. It may be that the UDM sends the user consent information to the base station.

In an embodiment, after receiving the notification information, in response to the user consent information indicating consent to report the predetermined information, the base station sends a first terminal information request message requesting to acquire the predetermined information to the terminal. In another embodiment, after receiving the notification information, in response to the user consent information indicating no consent to report the predetermined information, the base station does not send the first terminal information request message to the base station. In yet another embodiment, after receiving the notification information, in response to the user consent information indicating no consent to report the predetermined information, the base station sends a second terminal information request message carrying a request to acquire the location information of the terminal in the predetermined information to the terminal.

In an embodiment, if the user consent information indicates consents to report the predetermined information, the base station may send a UEInformationRequest message (corresponding to the first terminal information request message). The UEInformationRequest message indicates a request to report RLF or connection establishment failure report. In an embodiment, the UEInformationRequest message may further carry information indicating that location information is requested to be reported.

In another embodiment, if the user consent information indicates no consent to report the predetermined information, the base station cannot request the terminal to report the RLF or the connection establishment failure report.

In yet another embodiment, if the user consent information indicates no consent to report the predetermined information, the base station may send a second terminal information request message. In an embodiment, the second terminal information request message may carry information indicating that location information is requested to be reported.

It should be noted that those skilled in the art can understand that the methods provided by the embodiments of the present disclosure can be executed alone or together with some methods in the embodiments of the present disclosure or some methods in related technologies.

As shown in FIG. 17A, a method of reporting information is provided in this embodiment, where the method is performed by a terminal, including:

At step 171A, in response to receiving the first terminal information request message, the predetermined information is reported according to the configuration information.

In an embodiment, default configuration predetermined information contains information of RLF and information of RRC connection establishment failure. In another embodiment, information specifically included in the predetermined information may be indicated in the configuration information. For example, the configuration information may indicate that information of RLF and the like.

In an embodiment, if the configuration information indicates that the predetermined information reported by the terminal needs to include the location information of the terminal, the predetermined information reported by the terminal includes the location information of the terminal. Otherwise, the predetermined information reported by the terminal does not include the location information of the terminal. In an embodiment, in response to the user consent information indicating consent to report the location information of the terminal, the predetermined information reported by the terminal is configured by default to include the location information of the terminal.

It should be noted that those skilled in the art can understand that the methods provided by the embodiments of the present disclosure can be executed alone or together with some methods in the embodiments of the present disclosure or some methods in related technologies.

As shown in FIG. 17B, a method of reporting information is provided in this embodiment, where the method is performed by a terminal, including:
at step 171B, in response to receiving the second terminal information request message, the location information of the terminal in the predetermined information is reported according to the configuration information.

It should be noted that those skilled in the art can understand that the methods provided by the embodiments of the present disclosure can be executed alone or together with some methods in the embodiments of the present disclosure or some methods in related technologies.

The predetermined information includes at least one of the following:
radio link failure (RLF) information;
radio resource control (RRC) connection establishment failure information;
radio resource control (RRC) connection reestablishment failure information; or,
location information of the terminal.

In some possible implementations, the predetermined information includes the location information of the terminal in response to the user consent information indicating consent to report the location information of the terminal.

It should be noted that the predetermined information may further include other measurement information such as signal quality of a cell, WiFi, Bluetooth and air pressure, and is not limited here.

In an embodiment, default configuration predetermined information contains information of RLF and information of RRC connection establishment failure. In another embodiment, information specifically included in the predetermined information may be indicated in the configuration information. For example, the configuration information may indicate that information of RLF and the like.

In an embodiment, if the configuration information indicates that the predetermined information reported by the terminal needs to include the location information of the terminal, the predetermined information reported by the terminal includes the location information of the terminal. Otherwise, the predetermined information reported by the terminal does not include the location information of the terminal. In an embodiment, in response to the user consent information indicating consent to report the location information of the terminal, the predetermined information reported by the terminal is configured by default to include the location information of the terminal.

In an embodiment, the configuration information includes one or more of the following:
first information, indicating that the configuration information is applicable for reporting RLF, RRC connection establishment failure and/or RRC connection reestablishment failure;
second information, indicating that the configuration information is applicable for reporting a master cell group RLF and/or a secondary cell group RLF;
third information, indicating that the configuration information is applicable for reporting when the terminal is in an RRC idle state, an RRC inactive state and/or an RRC connected state;
fourth information, indicating an area where the configuration information takes effect;
fifth information, indicating a time when the configuration information takes effect; or
sixth information, indicating whether the predetermined information contains or does not contain location information of the terminal.

In an embodiment, when the terminal is in the RRC connected state, the reported predetermined information includes RLF information. When the terminal is in the RRC idle state or the RRC inactive state, the reported predetermined information includes the information of the RRC connection establishment failure and/or the RRC connection reestablishment failure.

In an embodiment, the effective area can be represented by a physical cell identifier, a cell identifier, a tracking area identifier, a notification area identifier and the like. The terminal records and reports the predetermined information only when RLF, RRC connection establishment failure and/or RRC connection reestablishment failure occurs in this area. At the same time, time can further be configured, and the terminal records and reports the predetermined information only when RLF, RRC connection establishment failure and/or RRC connection reestablishment failure occurs in this area.

In an embodiment, in response to the sixth information indicating that the predetermined information contains the location information of the terminal, the reported predetermined information contains the location information of the terminal. Or, in response to the sixth information indicating that the predetermined information does not contain the location information of the terminal, the reported predetermined information does not contain the location information of the terminal.

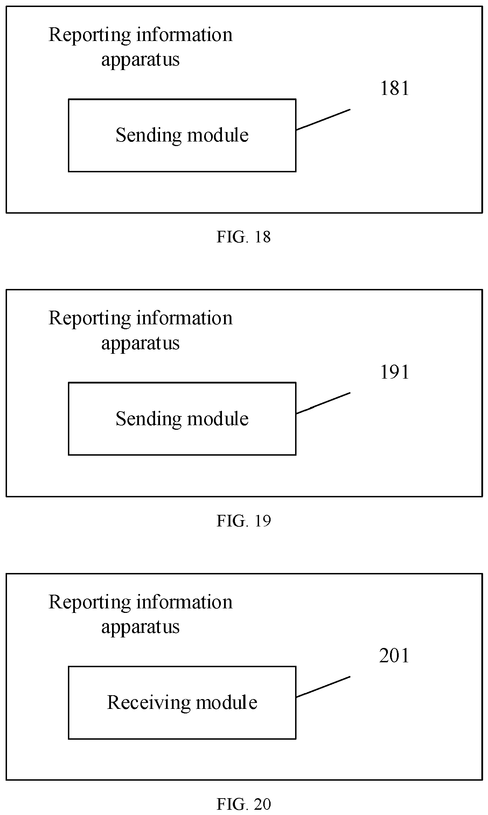

As shown in FIG. 18, an apparatus of reporting information is provided in this embodiment, where the apparatus includes:
a sending module 181, configured to send activation indication information to a base station;
where the activation indication information indicates that the base station transmits configuration information for enabling a terminal to report predetermined information.

It should be noted that those skilled in the art can understand that the methods provided by the embodiments of the present disclosure can be executed alone or together with some methods in the embodiments of the present disclosure or some methods in related technologies.

As shown in FIG. 19, an apparatus of reporting information is provided in this embodiment, where the apparatus includes:
a sending module 191, configured to send configuration information to the terminal;
where the configuration information is used to enable the terminal to report predetermined information.

It should be noted that those skilled in the art can understand that the methods provided by the embodiments of the present disclosure can be executed alone or together with some methods in the embodiments of the present disclosure or some methods in related technologies.

As shown in FIG. 20, an apparatus of reporting information is provided in this embodiment, where the apparatus includes:
a receiving module 201, configured to receive configuration information sent by a base station; and
report predetermined information according to the configuration information.

It should be noted that those skilled in the art can understand that the methods provided by the embodiments of the present disclosure can be executed alone or together with some methods in the embodiments of the present disclosure or some methods in related technologies.

An embodiment of the present disclosure provides a communication device, which includes:
a processor, and
a memory, configured to store processor-executable instructions;
where the processor is configured to implement the method applied to any embodiment of the present disclosure when the executable instructions are executed.

The processor may include various types of storage media, which are non-transitory computer storage media, and can continue to remember the information stored on the communication device after the communication device is powered down.

The processor may be connected to the memory via a bus, etc., configured to read an executable program stored on the memory.

An embodiment of the present disclosure further provides a computer storage medium, where the computer storage medium stores a computer executable program, and the executable program, when executed by a processor, realizes the method of any embodiment of the present disclosure.

Specific manners for devices in the apparatus in the foregoing embodiment to perform operations have been described in detail in the embodiments of the method. Details are not described herein again.

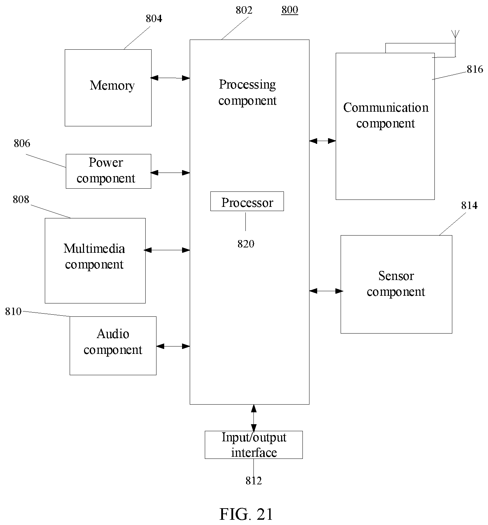

As shown in FIG. 21, an embodiment of the present disclosure provides a structure of a terminal.

Referring to a terminal 800 shown in FIG. 21, this embodiment provides the terminal 800, which can specifically be a mobile phone, a computer, a digital broadcast terminal, a message transceiving device, a game console, a tablet device, a medical device, a fitness device and a personal digital assistant and so on.

As shown in FIG. 21, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls overall operations of the terminal 800, such as operations associated with display, phone calls, data communications, camera operations, and recording operations. The processing assembly 802 may include one or more processors 820 to execute instructions to complete all or a part of the blocks of the above methods. In addition, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store different types of data to support operations at the apparatus 800. Examples of such data include instructions for any application or method operated on the terminal 800, contact data, phonebook data, messages, pictures, videos, and so on. The memory 804 may be implemented by any type of volatile or non-volatile storage devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power supply component 806 supplies power for different components of the terminal 800. The power supply component 806 can include a power supply management system, one or more power supplies, and other components associated with generating, managing and distributing power for the terminal 800.

The multimedia component 808 includes a screen providing an output interface between the terminal 800 and a user. In some embodiments, the screen may include a liquid crystal display (LCD) and a touch panel (TP). If the screen includes the TP, the screen may be implemented as a touch screen to receive input signals from the user. The TP may include one or more touch sensors to sense touches, swipes, and gestures on the TP. The touch sensor may not only sense the boundary of a touch or slide operation but also detect duration and pressure relating to the touch or slide operation. In some examples, the multimedia component 808 may include a front camera and/or a rear camera. When the apparatus 800 is in an operation mode, such as a shooting mode or a video mode, the front camera and/or the rear camera may receive external multimedia data. Each of the front camera and the rear camera may be a fixed optical lens system or have focal length and optical zooming capability.

The audio component 810 is configured to output and/or input an audio signal. For example, the audio component 810 includes a microphone (MIC). When the terminal 800 is in an operation mode, such as a call mode, a record mode and a voice recognition mode, the microphone is configured to receive an external audio signal. The received audio signal may be further stored in the memory 804 or sent via the communication component 816. In some examples, the audio component 810 also includes a speaker for outputting an audio signal.

The I/O interface 812 may provide an interface between the processing component 802 and peripheral interface modules. The above peripheral interface modules may include a keyboard, a click wheel, buttons and so on. These buttons may include but not limited to, a home button, a volume button, a start button and a lock button.

The sensor component 814 includes one or more sensors to provide status assessments of various aspects for the terminal 800. For example, the sensor component 814 may detect an on/off state of the apparatus 800 and a relative location of components. For example, the components are a display and a keypad of the terminal 800. The sensor component 814 may also detect a position change of the terminal 800 or a component of the terminal 800, presence or absence of a touch of a user on the terminal 800, an orientation or acceleration/deceleration of the terminal 800, and a temperature change of terminal 800. The sensor component 814 may include a proximity sensor for detecting the existence of a nearby object without any physical touch. The sensor component 814 may also include a CMOS or CCD image sensor applied in an imaging application. In some examples, the sensor component 814 may also include an acceleration sensor, a gyro sensor, a magnetic sensor, a pressure sensor, or a temperature sensor.

The communication component 816 is to facilitate wired or wireless communication between the terminal 800 and other devices. The terminal 800 may access a wireless network based on a communication standard, such as WiFi, 2G or 3G, or a combination thereof. In an exemplary embodiment, the communication component 816 receives a broadcast signal or broadcast related information from an external broadcast management system via a broadcast channel. In an exemplary embodiment, the communication assembly 816 may also include a Near Field Communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology, and other technologies.

In an exemplary embodiment, the terminal 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, for executing the methods.

In an exemplary embodiment, a non-transitory computer readable storage medium including instructions, such as the memory 804 including instructions, is also provided. The above instructions may be executed by the processor 820 of the terminal 800 to complete the above method. For example, the non-transitory computer-readable storage medium may be a ROM, a RAM, a CD-ROM, a magnetic tape, a floppy disc, an optical data storage device, and the like.

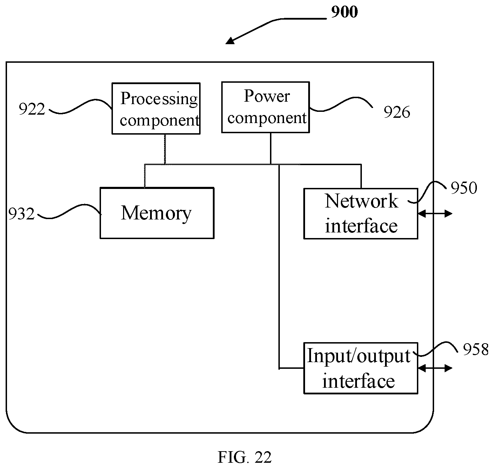

As shown in FIG. 22, an embodiment of the present disclosure provides a structure of a base station. For example, a base station 900 may be provided as a network side device. Referring to FIG. 22, the base station 900 includes: a processing component 922, which further including one or more processors, and a memory resource represented by a memory 932, the memory resource being used for storing instructions that can be executed by a processing component 922, such as an application. The application stored in the storage medium 932 may include one or more modules, each of which corresponds to a set of instructions. In addition, the processing component 922 is configured to execute instructions to perform any of the aforementioned methods applied to the base station.

The base station 900 may further include: a power component 926, configured to manage power supply of the base station 900, a wired or wireless network interface 950, configured to connect the base station 900 to a network, and an input/output (I/O) interface 958. The base station 900 may operate based on an operating system, such as Windows Server TM, Mac OS XTM, UnixTM, LinuxTM, FreeBSDTM or the like, stored in the memory 932.

Other embodiments of the present disclosure will be readily apparent to those skilled in the art after considering the specification and practicing the contents disclosed herein. The present disclosure is intended to cover any variations, uses, or adaptations of the present disclosure, which follow the general principle of the present disclosure and include common knowledge or conventional technical means in the art that are not disclosed in the present disclosure. The specification and examples are to be regarded as illustrative only. The true scope and spirit of the present disclosure are pointed out by the following claims.

It should be understood that the present disclosure is not limited to the precise structure described above and shown in the accompanying drawings, and various modifications and changes can be made without departing from the scope of the present specification. The scope of the present disclosure is limited only by the appended claims.

## Claims

1. A method of reporting information, performed by a core network device, comprising:
sending activation indication information to a base station;
wherein the activation indication information indicates that the base station transmits configuration information for enabling a terminal to report predetermined information.

2. The method according to claim 1, wherein sending the activation indication information to the base station comprises:
sending the activation indication information to the base station according to user consent information, wherein the user consent information indicates that the terminal consents to report the predetermined information; or,
sending the activation indication information to the base station according to a trigger event.

3. The method according to claim 2, wherein in response to sending the activation indication information to the base station according to the trigger event, the method further comprises:
sending user consent information to the base station, wherein the user consent information indicates whether the terminal consents to report the predetermined information.

4. The method according to claims 1 to 3, wherein the predetermined information comprises at least one of:
radio link failure RLF information;
radio resource control RRC connection establishment failure information;
RRC connection reestablishment failure information; or,
location information of the terminal.

5. The method according to claim 4, wherein in response to user consent information indicating consent to report the location information of the terminal, the predetermined information comprises the location information of the terminal.

6. A method of reporting information, performed by a base station, comprising:
sending configuration information to a terminal;
wherein the configuration information is used to enable the terminal to report predetermined information.

7. The method according to claim 6, further comprising:
receiving activation indication information sent by a core network device;
wherein the activation indication information indicates the base station to transmit the configuration information.

8. The method according to claim 6, wherein receiving the activation indication information sent by the core network device comprises:
receiving the activation indication information sent by the core network device according to user consent information, wherein the user consent information is used to indicate that the terminal consents to report the predetermined information; or,
receiving the activation indication information sent by the core network device according to a trigger event.

9. The method according to claim 6, wherein in response to receiving the activation indication information sent by the core network device according to the trigger event, the method further comprises:
receiving user consent information sent by the core network device, wherein the user consent information is used to indicate whether the terminal consents to report the predetermined information.

10. The method according to claim 9, wherein sending the configuration information to the terminal comprises:
in response to receiving the activation indication information sent by the core network device and determining that the user consent information indicates consent to report the predetermined information, sending the configuration information to the terminal.

11. The method according to claim 6, wherein sending the configuration information to the terminal comprises:
sending a radio resource control RRC connection reconfiguration message carrying the configuration information to the terminal; or,
sending an RRC connection release message carrying the configuration information to the terminal.

12. The method according to claim 6, further comprising:
receiving notification information of the predetermined information reported by the terminal;
wherein the notification information indicates that the predetermined information is available and/or a type of the predetermined information.

13. The method according to claim 12, further comprising:
in response to receiving the notification information, determining whether to send a terminal information request message according to user consent information;
wherein the terminal information request message is used for requesting the terminal to report the predetermined information.

14. The method according to claim 13, wherein determining whether to send the terminal information request message according to the user consent information comprises:
in response to the user consent information indicating consent to report the predetermined information, sending a first terminal information request message requesting to acquire the predetermined information; or,
in response to the user consent information indicating no consent to report the predetermined information, not sending the first terminal information request message; or,
in response to the user consent information indicating no consent to report the predetermined information, sending a second terminal information request message carrying a request to acquire the location information of the terminal in the predetermined information.

15. The method according to claims 6 to 14, wherein the predetermined information comprises at least one of:
radio link failure RLF information;
radio resource control RRC connection establishment failure information;
RRC connection reestablishment failure information; or,
location information of the terminal.

16. The method according to claim 15, wherein in response to user consent information indicating consent to report the location information of the terminal, the predetermined information comprises the location information of the terminal.

17. The method according to claims 6 to 16, wherein the configuration information comprises at least one of:
first information, indicating that the configuration information is applicable for reporting radio link failure RLF, radio resource control RRC connection establishment failure and/or RRC connection reestablishment failure;
second information, indicating that the configuration information is applicable for reporting a master cell group RLF and/or a secondary cell group RLF;
third information, indicating that the configuration information is applicable for reporting when the terminal is in an RRC idle state, an RRC inactive state and/or an RRC connected state;
fourth information, indicating an area where the configuration information takes effect;
fifth information, indicating a time when the configuration information takes effect; or
sixth information, indicating whether the predetermined information contains or does not contain location information of the terminal.

18. A method of reporting information, performed by a terminal, comprising:
receiving configuration information sent by a base station; and
reporting predetermined information according to the configuration information.

19. The method according to claim 18, wherein receiving the configuration information sent by the base station comprises:
receiving a radio resource control RRC connection reconfiguration message carrying the configuration information sent by the base station; or,
receiving an RRC connection release message carrying the configuration information sent by the base station.

20. The method according to claim 18, further comprising:
reporting notification information of the predetermined information;
wherein the notification information indicates that the predetermined information is available and/or a type of the predetermined information.

21. The method according to claim 20, wherein reporting the notification information of the predetermined information comprises:
reporting a radio resource control RRC connection establishment completion message carrying the notification information; or,
reporting an RRC connection reestablishment completion message carrying the notification information.

22. The method according to claim 19, further comprising:
receiving a first terminal information request message indicating the predetermined information; or,
receiving a second terminal information request message carrying a request to acquire location information of the terminal in the predetermined information.

23. The method according to claim 22, wherein in response to receiving the first terminal information request message, reporting the predetermined information according to the configuration information comprises:
reporting the predetermined information according to the configuration information.

24. The method according to claim 22, wherein in response to receiving the second terminal information request message, reporting the predetermined information according to the configuration information comprises:
reporting the location information of the terminal in the predetermined information according to the configuration information.

25. The method according to claims 18 to 24, wherein the predetermined information comprises at least one of:
radio link failure RLF information;
radio resource control RRC connection establishment failure information;
RRC connection reestablishment failure information; or,
location information of the terminal.

26. The method according to claim 25, wherein in response to user consent information indicating consent to report the location information of the terminal, the predetermined information comprises the location information of the terminal.

27. The method according to claims 18 to 26, wherein the configuration information comprises at least one of:
first information, indicating that the configuration information is applicable for reporting radio link failure RLF, radio resource control RRC connection establishment failure and/or RRC connection reestablishment failure;
second information, indicating that the configuration information is applicable for reporting a master cell group RLF and/or a secondary cell group RLF;
third information, indicating that the configuration information is applicable for reporting when the terminal is in an RRC idle state, an RRC inactive state and/or an RRC connected state;
fourth information, indicating an area where the configuration information takes effect; or,
fifth information, indicating a time when the configuration information takes effect.

28. An apparatus for reporting information, used in a core network, comprising:
a sending module, configured to send activation indication information to a base station;
wherein the activation indication information indicates that the base station transmits configuration information for enabling a terminal to report predetermined information.

29. An apparatus for reporting information, used in a base station, comprising:
a sending module, configured to send configuration information to the terminal;
wherein the configuration information is used for indicating the terminal to report predetermined information.

30. An apparatus for reporting information, used in a terminal, comprising:
a receiving module, configured to receive configuration information sent by a base station; and
report predetermined information according to the configuration information.

31. A communication device, comprising:
a memory; and
a processor, connected to the memory, configured to execute computer-executable instructions stored on the memory, and capable of implementing the method according to any one of claims 1 to 5, 6 to 17 or 18 to 27.

32. A computer storage medium, wherein the computer storage medium stores computer-executable instructions, the computer-executable instructions, when executed by a processor, being capable of implementing the method according to any one of claims 1 to 5, 6 to 17 or 18 to 27.
